(19) Europäisches Patentamt / European Patent Office / Office européen des brevets

(11) **EP 2 585 418 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **11720761.3**

(22) Anmeldetag: **19.05.2011**

(51) Int Cl.:
*C04B 35/01* (2006.01)          *C04B 35/622* (2006.01)
*C04B 35/626* (2006.01)          *C04B 35/645* (2006.01)
*H01C 7/04* (2006.01)

(86) Internationale Anmeldenummer:
**PCT/EP2011/058184**

(87) Internationale Veröffentlichungsnummer:
**WO 2011/160904 (29.12.2011 Gazette 2011/52)**

(54) **KOBALTFREIE NTC-KERAMIK UND VERFAHREN ZUR HERSTELLUNG EINER KOBALTFREIEN NTC-KERAMIK**

COBALT-FREE NTC CERAMIC AND METHOD FOR PRODUCING A COBALT-FREE NTC CERAMIC

CÉRAMIQUE À CTN EXEMPTE DE COBALT ET PROCÉDÉ DE FABRICATION D'UNE TELLE CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2010 DE 102010024863**

(43) Veröffentlichungstag der Anmeldung:
**01.05.2013 Patentblatt 2013/18**

(73) Patentinhaber: **TDK Electronics AG**
**81671 München (DE)**

(72) Erfinder: **FELTZ, Adalbert**
**A-8530 Deutschlandsberg (AT)**

(74) Vertreter: **Epping - Hermann - Fischer Patentanwaltsgesellschaft mbH**
**Postfach 20 07 34**
**80007 München (DE)**

(56) Entgegenhaltungen:
**JP-A- 6 231 771**

- **PARK ET AL: "Mn-Ni-Co-Cu-Zn-O NTC thermistors with high thermal stability for low resistance applications", SCRIPTA MATERIALIA, ELSEVIER, AMSTERDAM, NL, Bd. 57, Nr. 4, 7. Juni 2007 (2007-06-07), Seiten 329-332, XP022108702, ISSN: 1359-6462, DOI: 10.1016/J.SCRIPTAMAT.2007.04.026**

- **ZHAO ET AL: "Effects of Cu and Zn co-doping on the electrical properties of Ni0.5Mn2.5O4 NTC ceramics", JOURNAL OF THE EUROPEAN CERAMIC SOCIETY, ELSEVIER SCIENCE PUBLISHERS, BARKING, ESSEX, GB, Bd. 28, Nr. 1, 26. Oktober 2007 (2007-10-26), Seiten 35-40, XP022316923, ISSN: 0955-2219, DOI: 10.1016/J.JEURCERAMSOC.2007.06.007**
- **PARK K ET AL: "The effect of ZnO content and sintering temperature on the electrical properties of Cu-containing Mn1.95-xNi0.45Co0.15Cu0.45ZnxO4 (0@?x@?0.3) NTC thermistors", JOURNAL OF ALLOYS AND COMPOUNDS, ELSEVIER SEQUOIA, LAUSANNE, CH, Bd. 475, Nr. 1-2, 5. Mai 2009 (2009-05-05), Seiten 513-517, XP026035600, ISSN: 0925-8388, DOI: 10.1016/J.JALLCOM.2008.07.076 [gefunden am 2008-09-11]**
- **Epcos Ag: "Inrush Current Limiting Application Note Application Notes Application Note NTC thermistors for inrush current limiting Content", , 30 April 2007 (2007-04-30), XP055296975, Retrieved from the Internet: URL:http://www.eetasia.com/STATIC/PDF/2008 06/EEOL_2008JUN24_POW_AN_10.pdf?SOURC ES=DO WNLOAD [retrieved on 2016-08-23]**

EP 2 585 418 B1

**Beschreibung**

Die Erfindung betrifft eine kobaltfreie Keramik mit negativem Temperaturkoeffizienten des elektrischen Widerstands (NTC-Keramik). Weiterhin wird ein Verfahren zur Herstellung einer kobaltfreien NTC-Keramik angegeben, deren Zusammensetzung von einer kobalthaltigen NTC-Keramik abgeleitet ist. Die Verwendung der kobaltfreien Keramik ist weiterer Gegenstand der Anmeldung.

NTC-Keramiken können beispielsweise zur Einschaltstrombegrenzung (ICL, insurance current limited) eingesetzt werden. Sie sind relativ niederohmige Halbleiter, die in Reihe mit einem Lastwiderstand (beispielsweise einem Gerät) geschaltet eine auftretende Einschaltstromspitze dämpfen können. Infolge Joulescher Erwärmung kann sich der Widerstand einer NTC-Keramik im Betrieb bei hinreichend hoher Aktivierungsenergie rasch weiter verringern, wodurch binnen kurzer Zeit eine hohe Stromleitung erreicht wird.

Die Temperaturabhängigkeit des spezifischen Widerstands $\rho_T$ der NTC-Keramik kann in einem bestimmten Temperaturbereich, beispielsweise zwischen 25°C und 100°C, in guter Näherung durch die Formel

$$\rho_T = \rho_{25°C} \cdot e^{B/T}$$

beschrieben werden. Dabei ist $\rho_{25°C}$ der spezifische Widerstand bei der Bezugstemperatur, der so genannten Nenntemperatur, und die B-Konstante gemäß der Beziehung $E_A = k\,B$ ein Ausdruck für die Aktivierungsenergie $E_A$ des Ladungstransports. Dabei bedeutet k die Boltzmann-Konstante.

Der spezifische Widerstand $\rho_{25°C}$ und die B-Konstante sind also charakteristische Größen einer NTC-Keramik und definieren in einem bestimmten Temperaturbereich, wie zum Beispiel zwischen 25°C und 100°C, die Eckpunkte der so genannten Kennlinie einer NTC-Keramik.

NTC-Keramiken können beispielsweise oxidkeramische Halbleiter sein, die Übergangsmetallkationen in benachbarten Oxidationsstufen auf kristallografisch äquivalenten Gitterplätzen enthalten. Es bildet sich dadurch eine hohe Volumenkonzentration an beweglichen elektrischen Ladungsträgern aus, deren Transport durch Gitterschwingungen thermisch angeregt wird und zwischen Gitterplätzen, die durch Übergangsmetallkationen in benachbarten Oxidationsstufen besetzt sind, zustande kommt. Die Kopplung elektrischer Ladungsträger an Gitterschwingungen wird auch als Polaronentransport bezeichnet.

Der isomorphe Einbau von Kationen unterschiedlicher Wertigkeit auf kristallografisch äquivalenten Gitterplätzen verursacht bei statistischer Verteilung zugleich eine von Gitterplatz zu Gitterplatz variable Bindungsenergie der Polaronen an die mit Kationen benachbarter Oxidationsstufen besetzten Gitterplätze, sodass sich aufgrund derartiger Schwankungen eine hinreichend hohe Aktivierungsenergie einstellt, die einen raschen temperaturbedingten Stromanstieg gewährleistet.

Derartige Eigenschaften sind bislang auf der Basis von Oxidsystemen der Form $AB_2O_4$ in phasenhomogenen sowie phasenheterogenen Mischphasen realisiert worden, die die Spinellstruktur ausbilden. Phasenhomogen bedeutet in diesem Zusammenhang, dass die Bestandteile der Keramik auf der Basis der Spinellstruktur mit der allgemeinen Zusammensetzung $AB_2O_4$ eine feste Lösung bilden. Phasenheterogen ist die Mischphase, wenn mindestens zwei verschiedene Spinelle unterschiedlicher Struktur nebeneinander vorliegen oder einzelne Bestandteile nicht oder nicht vollständig gelöst sind und somit auch als Bestandteil neben der festen Lösung vorhanden sind.

Die Oxidsysteme enthalten beispielsweise Kobaltoxid, Nickeloxid und Kupferoxid jeweils in Verbindung mit Manganoxid als Hauptbestandteil. Je nach Zusammensetzung tritt dabei Mangan in variablen Anteilen drei- und vierwertig, Kobalt zwei- und dreiwertig, Kupfer zwei- sowie optional auch einwertig und Nickel zweiwertig auf.

Aufgrund unterschiedlicher Werte der Kristallfeldstabilisierungsenergie, denen die Übergangsmetallkationen in ihren verschiedenen Oxidationsstufen auf den Oktaeder- und Tetraeder-Plätzen der Spinellstruktur unterliegen, ergeben sich temperaturabhängige Kationenverteilungen und häufig auch Symmetrieverzerrungen, die zu phasenheterogenen Mischphasen kubischer und tetragonaler beziehungsweise rhombischer Spinelle unterschiedlicher Zusammensetzung führen. Die elektrischen Eigenschaften ergeben sich in solchen Fällen aus der Superposition von Eigenschaften der Bestandteile eines phasenheterogenen Gefüges, das im Fertigungsprozess reproduzierbar eingestellt werden kann.

Die japanische Patentanmeldung JP 6 231 771 A offenbart ein Material für Luft-Elektroden und für die Elektroden von Festkörperbrennstoffzellen mit der Zusammensetzung $M_xMn_{3-x}O_4$ und mit einer Spinell-Kristallstruktur. In der chemischen Formel steht M für zumindest ein Element ausgewählt aus Ni, Cu und Zn, während für x gilt: $0{,}01 \leq x \leq 1{,}5$.

Der Anwenderhinweis "Application Note NTC thermistors for inrush current limiting" der EPCOS AG vom April 2007, XP055296975, beschäftigt sich mit NTC-Thermistoren für die Anwendung als Einschaltstrombegrenzer.

Die wissenschaftliche Publikation Part K. et al. "The effect of ZnO content and sintering temperature on the electrical properties of Cu-containing Mn1.95-xNi0.45Co0.15Cu0.45ZnxO4(0 ≤ x ≤ 0.3) NTC thermistors" (veröffentlicht 2009 im Journal of Alloys and Compounds, Bd. 475, Seiten 513-517) offenbart feste Lösungen mit der Formel

$Mn_{1,95-x}Ni_{0,45}Co_{0,15}Cu_{0,45}Zn_xO_4$ als NTC-Thermistoren.

Eine Aufgabe der Erfindung ist es, alternative NTC-Keramiken bereitzustellen, die günstig herzustellen sind und in ihren elektrischen Eigenschaften, beispielsweise ihrem spezifischen Widerstand oder der Aktivierungsenergie, den bekannten Oxidsystemen weitgehend entsprechen, also gleiche oder ähnliche Kennlinienwerte $\rho_{25°C}$ und B aufweisen. Diese Aufgabe wird durch die NTC-Keramik gemäß Anspruch 1 gelöst. Weitere Ausführungsformen der NTC-Keramik, ein Verfahren zur Herstellung solcher Keramiken sowie ihre Verwendung sind Gegenstand weiterer Ansprüche.

Es wird eine kobaltfreie Keramik mit negativem Temperaturkoeffizienten des elektrischen Widerstands (NTC-Keramik) angegeben, die die allgemeine Formel $Ni_{a'}Cu_{b'}Zn_{c'}Mn_{d'}O_4$ aufweist. Dabei gilt 0,09 < a' < 0,6, 0,02 < b' < 0,65, 0,12 < c' < 0,58 und 1,6 < d' < 2,1 mit a' + b' + c' + d' = 3. Derartige NTC-Keramiken weisen vorteilhafte elektrische Eigenschaften, also einen geringen spezifischen Widerstand $\rho_{25°C}$ und eine trotz des niedrigen spezifischen Widerstandes hinreichend hohe Aktivierungsenergie $E_A$, auf und sind günstig herzustellen. Die günstige Herstellung wird dadurch bewirkt, dass bei dem quaternären Spinellsystem $Ni_{a'}Cu_{b'}Zn_{c'}Mn_{d'}O_4$ auf die teure Kobaltkomponente verzichtet werden kann.

Ein niedriger spezifischer Widerstand gewährleistet beispielsweise bei einem ICL, der mit einem Gerät in Reihe geschaltet ist, bereits bei Raumtemperatur Stromfluss. Der ICL erwärmt sich dadurch und erreicht einen noch niedrigeren Widerstand, der schließlich kleiner ist als der Innenwiderstand des Geräts, welcher nun die Begrenzung des Stromflusses übernimmt. Die Joulesche Erwärmung der Keramik des ICL nimmt dann auch nicht mehr zu. Dieser stationäre Zustand stellt sich umso rascher ein, je höher die Aktivierungsenergie ist.

Gleichzeitig weist diese NTC-Keramik übereinstimmende oder ähnliche Eigenschaften auf, wie eine analog zusammengesetzte, kobalthaltige NTC-Keramik, die statt des Zn-Anteils einen Co-Anteil in ihrer Zusammensetzung aufweist. Die kobalthaltige NTC-Keramik weist die allgemeine Zusammensetzung $Ni_aCu_bCo_cMn_dO_4$ mit 0,09 < a < 0,6, 0,02 < b < 0,65, 0,12 < c < 0,58 und 1,6 < d < 2,1 auf mit a + b + c + d = 3.

Bei der Herstellung der Kobaltfreien NTC-Keramik kann also auf den Bestandteil Kobaltoxid in der Mischphase verzichtet und stattdessen Zinkoxid eingesetzt werden, und die Zusammensetzung so weit angepasst werden, dass sich die elektrischen Eigenschaften in Form der Kennliniendaten, also die die Aktivierungsenergie $E_A$ des Ladungstransports charakterisierende B-Konstante und gegebenenfalls auch der spezifische Widerstand $\rho_{25°C}$, der kobaltfreien NTC-Keramik und der kobalthaltigen NTC-Keramik, höchstens geringfügig voneinander abweichen.

Es wird eine kobaltfreie NTC-Keramik angegeben, die eine die Aktivierungsenergie $E_A$ des Ladungstransports charakterisierende B-Konstante aufweist, die von der B-Konstante einer kobalthaltigen NTC-Keramik der allgemeinen Formel $Ni_aCu_bCo_cMn_dO_4$ um weniger als 1% abweicht. a, b, c und d der kobalthaltigen NTC-Keramik können jeweils aus dem gleichen Bereich ausgewählt sein, wie a', b', c' und d'. a, b, c und d können dabei jeweils gleich oder unterschiedlich von a', b', c' und d' sein. Weiterhin gilt a + b + c + d = 3 und a' + b' + c' + d' = 3.

Die B-Konstante der kobaltfreien NTC-Keramik kann von der B-Konstante der kobalthaltigen Keramik beispielsweise um weniger als 0,1% abweichen.

Neben der B-Konstante kann auch der spezifische Widerstand $\rho_{25°C}$ der kobaltfreien NTC-Keramik nur geringfügig von dem spezifischen Widerstand der kobalthaltigen NTC-Keramik abweichen. Eine weitgehende Übereinstimmung der spezifischen Widerstände der kobalthaltigen und der kobaltfreien NTC-Keramik kann weiterhin durch Anpassung der Dimensionierung des die NTC-Keramik enthaltenden Bauteils erreicht werden.

Eine kobaltfreie NTC-Keramik kann eine Zusammensetzung aufweisen, die aus einer Gruppe ausgewählt ist, die $Ni_{0,5748}Cu_{0,3164}Zn_{0,1440}Mn_{1,965}O_4$, $Ni_{0,6168}Cu_{0,1712}Zn_{0,2614}Mn_{1,9512}O_4$, $Ni_{0,5508}Cu_{0,1413}Zn_{0,2797}Mn_{2,0280}O_4$, $Ni_{0,2817}Cu_{0,3274}Zn_{0,3911}Mn_{2,000}O_4$ und $Ni_{0,4295}Cu_{0,4183}Zn_{0,1522}Mn_{2,000}O_4$ umfasst.

Die elektrischen Eigenschaften, also der spezifische Widerstand $\rho_{25°C}$ und die B-Konstante einer kobalthaltigen im Vergleich zu einer analog zusammengesetzten, kobaltfreien NTC-Keramik sind in folgender Tabelle zusammengefasst:

| Zusammensetzung | $\rho_{25°C}$ [$\Omega$cm] | $B_{25°C/100°C}$ [K] |
|---|---|---|
| $Ni_{0,5553}Cu_{0,2278}Co_{0,2685}Mn_{1,8984}O_4$ | 31 | 2915 |
| $Ni_{0,5748}Cu_{0,3164}Zn_{0,1440}Mn_{1,965}O_4$ | 30,5 | 2910 |
| $Ni_{0,5877}Cu_{0,1290}Co_{0,2835}Mn_{2,000}O_4$ | 97 | 3165 |
| $Ni_{0,6168}Cu_{0,1712}Zn_{0,2614}Mn_{1,9512}O_4$ | 97 | 3164 |
| $Ni_{0,5547}Cu_{0,1080}Co_{0,2817}Mn_{2,0553}O_4$ | 145 | 3300 |
| $Ni_{0,5508}Cu_{0,1413}Zn_{0,2797}Mn_{2,0280}O_4$ | 144 | 3299 |
| $Ni_{0,2817}Cu_{0,1499}Co_{0,5708}Mn_{1,998}O_4$ | 70 | 3060 |
| $Ni_{0,2817}Cu_{0,3274}Zn_{0,3911}Mn_{2,000}O_4$ | 315 | 3062 |
| $Ni_{0,5130}Co_{0,2475}Cu_{0,4602}Mn_{1,7993}O_4$ | 8 - 12 | 2800 |

(fortgesetzt)

| Zusammensetzung | $\rho_{25°C}$ [$\Omega$ cm] | $B_{25°C/100°C}$ [K] |
|---|---|---|
| $Ni_{0,4295}Cu_{0,4183}Zn_{0,1522}Mn_{2,000}O_4$ | 9,3 | 2797 |

Anhand der Tabelle ist ersichtlich, dass die B-Konstante in dem Temperaturbereich von 25°C bis 100°C der kobalthaltigen NTC-Keramik mit der entsprechenden B-Konstante der kobaltfreien NTC-Keramik weitgehende Übereinstimmung zeigt. Die Abweichung der B-Konstanten beträgt jeweils weniger als 0,1%.

Auch der spezifische Widerstand $\rho_{25°C}$ zeigt eine gute Übereinstimmung zwischen der kobalthaltigen NTC-Keramik und der entsprechenden kobaltfreien NTC-Keramik. Bei größeren Abweichungen im spezifischen Widerstand kann ein Ausgleich durch entsprechende Dimensionierung der Bauteile, in der die kobaltfreie NTC-Keramik eingesetzt werden soll, erreicht werden.

Es wird weiterhin ein Verfahren zur Herstellung einer kobaltfreien NTC-Keramik bereitgestellt. Die Zusammensetzung der kobaltfreien NTC-Keramik ist von einer kobalthaltigen NTC-Keramik mit der allgemeinen Formel $Ni_aCu_bCo_cMn_dO_4$ mit 0,09 < a < 0,6, 0,02 < b < 0,65, 0,12 < c < 0,58 und 1,6 < d < 2,1 abgeleitet mit a + b + c + d = 3, wobei Co durch Zn ersetzt ist. Das Verfahren umfasst die Verfahrensschritte

A) Formales Zerlegen von $Ni_aCu_bCo_cMn_dO_4$ in Spinell-Komponenten, die jeweils zumindest ein Oxid von Ni, Cu, Co oder Mn enthalten,

B) formales Ersetzen der zumindest kobalthaltigen Spinell-Komponenten durch kobaltfreie Spinell-Komponenten,

C) formales Zusammensetzen der zumindest teilweise ersetzten Spinell-Komponenten zu einer Zwischenstufe aufweisend die Zusammensetzung $Ni_\alpha Cu_\beta Zn_\gamma Mn_\delta O_4$ mit 0,09 < $\alpha$ < 0,6, 0,02 < $\beta$ < 0,65, 0,12 < $\gamma$ < 0,58 und 1,6 < $\delta$ < 2,1 mit $\alpha+\beta+\gamma+\delta$=3,

D) Anpassen von $\alpha,\beta,\gamma$ und $\delta$ zur Erhaltung einer Zusammensetzung $Ni_{a'}Cu_{b'}Zn_{d'}Mn_{d'}O_4$ mit 0,09 < a' < 0,6, 0,02 < b' < 0,65, 0,12 < c' < 0,58 und 1,6 < d' < 2,1,
wobei gilt a' + b' + c' + d' = 3
Dabei erfolgt die Anpassung um Verfahrensschritt D) derart, dass die elektrischen Eigenschaften der kobaltfreien NTC-Keramik an die elektrischen Eigenschaften der kobalthaltigen NTC-Keramik angeglichen werden.

E) Herstellen einer Keramik mit der Zusammensetzung $Ni_a,Cu_b,Zn_c,Mn_d,O_4$ aus Ausgangsstoffen, wobei der Verfahrensschritt E) folgende Verfahrensschritte umfasst:

E1) Mischen und Kalzinieren der Ausgangsstoffe im stöchiometrischen Verhältnis der Metallkationen, das mittels der Verfahrensschritte A)-D) erhalten wurde, und
E2) Sintern des im Verfahrensschritt E1) erhaltenen Materials.

Die Ausgangsstoffe im Verfahrensschritt E) können beispielsweise aus Metalloxiden und/oder Metallcarbonaten ausgewählt sein.

Für die Koeffizienten der im Verfahrensschritt C) erhaltenen Zwischenstufe gilt $\alpha+\beta+\gamma+\delta$ = 3.

Es wurde erkannt, dass die elektrischen Eigenschaften der quaternären Spinellsysteme bzw. der Spinell-Mischphase $Ni_aCu_bCo_cMn_dO_4$ näherungsweise auf eine entsprechende Mischung aus Spinell-Komponenten, die hoch- oder niederohmig sein können, zurückgeführt werden können. Hochohmige Spinelle sind beispielsweise $CoMn_2O_4$, $Co_3O_4$, $Mn_3O_4$ und $ZnMn_2O_4$ und niederohmige Spinelle sind beispielsweise $NiCo_2O_4$ und $CuMn_2O_4$, wobei $NiMn_2O_4$, $MnCo_2O_4$ und $Zn_{1,5}Mn_{1,5}O_4$ eine Zwischenstellung einnehmen. Diese Zerlegung vereinfacht das Ersetzen von Kobalt durch Zink in der quaternären, kobalthaltigen NTC-Keramik und die Anpassung der elektrischen Eigenschaften eines zinkhaltigen Spinells an die vorgegebenen Werte eines kobalthaltigen Spinells.

Im Verfahren können die Spinell-Komponenten im Verfahrensschritt A) aus einer Gruppe ausgewählt sein, die $CuMn_2O_4$, $NiMn_2O_4$, $MnCo_2O_4$, $NiCo_2O_4$, $Co_3O_4$, $CoMn_2O_4$ und $Mn_3O_4$ umfasst. $Co_3O_4$ kann im Fall eines Überschusses an Cobaltoxid in dem quaternären Spinell im Verfahrensschritt A) ausgewählt werden, $Mn_3O_4$ im Falle eines Überschusses an Manganoxid und $NiCo_2O_4$ im Falle eines unzureichenden Gehalts an Manganoxid.

Bei diesen Spinellen, in die die kobalthaltige NTC-Keramik im Verfahrensschritt A) zerlegt werden kann, handelt es sich um die niederohmigen kubischen Spinelle $CuMn_2O_4$, $NiMn_2O_4$, $MnCo_2O_4$, $NiCo_2O_4$ und die hochohmigen Spinelle $Co_3O_4$, $CoMn_2O_4$ und $Mn_3O_4$. $CoMn_2O_4$ und $Mn_3O_4$ sind tetragonal verzerrte Spinelle, die nur begrenzt in den kubischen Spinellen der Mischung löslich sind, sodass auch phasenheterogene Gefüge ausgebildet werden können, wenn die NTC-Keramik unter anderem in diese beiden Verbindungen zerlegt wird und die Grenzen der Löslichkeit überschritten sind. Die Zerlegung erfolgt näherungsweise, sodass die einzelnen Komponenten des quaternären, kobalthaltigen Spinells weitgehend in der gleichen Menge wie in dem quaternären Spinell in den verschiedenen, einzelnen Komponenten, in die die kobalthaltige NTC-Keramik zerlegt wird, vorhanden sind.

Im Verfahrensschritt B) können die kobaltfreien Spinell-Komponenten ausgewählt sein aus $ZnMn_2O_4$, $Zn_{1,5}Mn_{1,5}O_4$ und $CuMn_2O_4$. Es können also insbesondere zinkhaltige Spinelle ausgewählt werden. Damit können die hochohmigen, kobalthaltigen Spinelle $CoMn_2O_4$ und $Co_3O_4$ sowie gegebenenfalls auch $Mn_3O_4$, das ebenfalls hochohmig ist, durch den gleichfalls hochohmigen Spinell $ZnMn_2O_4$ oder auch $Zn_{1,5}Mn_{1,5}O_4$ ersetzt werden. Weiterhin wird $NiCo_2O_4$ durch $CuMn_2O_4$ substituiert, wenn in der ursprünglichen NTC-Keramik ein unzureichender Mn-Gehalt vorhanden war.

Im Verfahrensschritt C) wird die kobaltfreie NTC-Keramik $Ni_\alpha Cu_\beta Zn_\gamma Mn_\delta O_4$ als Zwischenstufe erhalten, deren stöchiometrische Koeffizienten $\alpha, \beta, \gamma$ und $\delta$ im Verfahrensschritt D) so angepasst werden, dass die stöchiometrischen Koeffizienten a', b', c' und d' resultieren, die die Rezeptur für eine kobaltfreie Keramik vorgeben, deren elektrische Eigenschaften weitgehend mit den elektrischen Eigenschaften der kobalthaltigen Keramik übereinstimmen.

Die Anpassung im Verfahrensschritt D) kann unter Angleichung der elektrischen Eigenschaften der kobaltfreien NTC-Keramik an die elektrischen Eigenschaften der kobalthaltigen NTC-Keramik erfolgen. Die Anpassung kann derart erfolgen, dass die B-Konstante der kobaltfreien NTC-Keramik von der B-Konstante der kobalthaltigen NTC-Keramik um weniger als 1%, vorzugsweise um weniger als 0,1% abweicht.

Eine Anpassung kann beispielsweise durch Variation der Anteile des hochohmigen Spinells $ZnMn_2O_4$ und des niederohmigen Spinells $CuMn_2O_4$ oder auch des hochohmigen Spinells $Mn_3O_4$ und des niederohmigen Spinells $CuMn_2O_4$ in der phasenhomogenen bzw. phasenheterogenen quaternären Mischphase, also der im Verfahrensschritt C) erhaltenen kobaltfreien Zwischenstufe erfolgen. Auch $NiMn_2O_4$ und $Zn_{1,5}Mn_{1,5}O_4$ können in die Variation einbezogen werden. Damit ergeben sich auf der Basis von $Ni_\alpha Cu_\beta Zn_\gamma Mn_\delta O_4$ bestimmte Werte von a', b', c' und d' für eine kobaltfreie NTC-Keramik, deren elektrische Eigenschaften durch die kobalthaltige Keramik vorgegeben und an diese weitgehend angenähert ist.

Der Verfahrensschritt D) kann die Schritte D1) Synthetisieren der im Verfahrensschritt C) erhaltenen Zwischenstufe $Ni_\alpha Cu_\beta Zn_\gamma Mn_\delta O_4$ der NTC-Keramik, D2) Ermitteln der Kennliniendaten der NTC-Keramik, D3) Anpassen der Koeffizienten $\alpha, \beta, \gamma$ und $\delta$ der Zwischenstufe unter Angleichung der elektrischen Eigenschaften an die elektrischen Eigenschaften der kobalthaltigen NTC-Keramik umfassen. In dem Verfahrensschritt D) kann somit eine neue Zwischenstufe $Ni_\alpha Cu_\beta Zn_\gamma Mn_\delta O_4$ erhalten und der Verfahrensschritt D) wiederholt und nach einigen Wiederholungen die kobaltfreie NTC-Keramik $Ni_{a'} Cu_{b'} Zn_{c'} Mn_{d'} O_4$ erhalten werden. Der Verfahrensschritt D) kann beispielsweise mindestens zweimal wiederholt werden. Die kobaltfreie NTC-Keramik $Ni_{a'} Cu_{b'} Zn_{c'} Mn_{d'} O_4$ kann auch nach einmaligem Durchführen des Verfahrensschritts D) erhalten werden.

Die Anpassung im Verfahrensschritt D) kann beispielsweise dadurch erfolgen, dass das im Verfahrensschritt C) erhaltene Verhältnis der hoch- und niederohmigen Spinelle in der Rezeptur $Ni_\alpha Cu_\beta Zn_\gamma Mn_\delta O_4$ chemisch hergestellt wird und die Kennliniendaten der dadurch erhaltenen NTC-Keramik, also ihr spezifischer Widerstand und die B-Konstante, gemessen werden. Der Vergleich der elektrischen Eigenschaften dieser kobaltfreien NTC-Keramik mit den elektrischen Eigenschaften der kobalthaltigen NTC-Keramik ermöglicht aufgrund der gegebenen Korrelation mit den Anteilen an hoch- und niederohmigen Spinellen in der Zusammensetzung die Ableitung eines nächsten Schrittes der Anpassung durch Interpolation bzw. Extrapolation. Dadurch kann mittels weniger, in der Regel bis zu maximal fünf Anpassungsschritten, also Wiederholungen des Verfahrensschrittes D) eine kobaltfreie Zusammensetzung $Ni_{a'} Cu_{b'} Zn_{c'} Mn_{d'} O_4$ erhalten werden, deren B-Konstante an die B-Konstante der kobalthaltigen NTC-Keramik angepasst ist.

Wie beansprucht umfasst das Verfahren im Verfahrensschritt E) die Verfahrensschritte:

E1) Mischen und Kalzinieren der Ausgangsstoffe im stöchiometrischen Verhältnis und

E2) Sintern des im Verfahrensschritt E1) erhaltenen Materials.

Die Ausgangsstoffe können dabei aus einer Gruppe, die Manganoxid, Nickelcarbonat, Kupferoxid oder Zinkoxid aufweist, ausgewählt sein.

Damit wird im Verfahrensschritt E) die Rezeptur, die mittels der Verfahrensschritte A), B), C) und D) bereitgestellt worden ist, zu einer NTC-Keramik verarbeitet.

Nach diesem Verfahren kann beispielsweise im Verfahrensschritt A) die Spinell-Mischphase $Ni_{0,5553} Cu_{0,2278} Co_{0,2685} Mn_{1,8984} O_4$ in 0,5553 $NiMn_2O_4$, 0,2778 $CuMn_2O_4$, 0,0653 $CoMn_2O_4$ und 0,1016 $MnCo_2O_4$ formal zerlegt werden. Diese kobalthaltige NTC-Keramik weist einen spezifischen Widerstand $\rho_{25°C}$ von 31 $\Omega$cm und eine B-Konstante von 2915 K auf. Im Verfahrensschritt B) kann dann $CoMn_2O_4$ durch $ZnMn_2O_4$ und $MnCo_2O_4$ durch 2/3$Zn_{1,5}Mn_{1,5}O_4$ ersetzt werden, sodass im Verfahrensschritt C) für die kobaltfreie NTC-Keramik als Zwischenstufe eine Zusammensetzung von $Ni_{0,5748} Cu_{0,2874} Zn_{0,1728} Mn_{1,965} O_4$ resultiert, die einen spezifischen Widerstand $\rho_{25°C}$ von 38 $\Omega$cm und eine B-Konstante von 2990 K aufweist. Sollen die elektrischen Werte an diejenigen der kobalthaltigen NTC-Keramik angepasst werden, kann beispielsweise im Verfahrensschritt D) 10 mol-% des Gehalts an $CuMn_2O_4$ zusätzlich anstelle von $ZnMn_2O_4$ eingebaut werden, woraus schließlich im Verfahrensschritt D) die Zusammensetzung $Ni_{0,5748}Cu_{0,3164}Zn_{0,1440}Mn_{1,965}O_4$ erhalten wird. Diese Zusammensetzung weist die Eigenschaften $\rho_{25°C} = 30,5$ Qcm und eine B-Konstante von 2910 K auf, was weitgehend mit den jeweiligen Werten der kobalthaltigen NTC-Keramik übereinstimmt.

Weiterhin kann in dem Verfahren im Verfahrensschritt A) als kobalthaltige NTC-Keramik $Ni_{0,5877}Cu_{0,1290}Co_{0,2835}Mn_{2,000}O_4$ in 0,5877 $NiMn_2O_4$, 0,1290 $CuMn_2O_4$ und 0,2835 $CoMn_2O_4$ formal zerlegt werden. Diese kobalthaltige Keramik weist ein $\rho_{25°C}$ von 97 Qcm und eine B-Konstante von 3165 K auf. Im Verfahrensschritt B) kann $CoMn_2O_4$ durch $ZnMn_2O_4$ ersetzt werden, womit im Verfahrensschritt C) als Zwischenstufe eine kobaltfreie NTC-Keramik der Zusammensetzung $Ni_{0,5877}Cu_{0,1290}Zn_{0,2835}Mn_{2,000}O_4$ erhalten wird. Diese kobaltfreie NTC-Keramik hat einen spezifischen Widerstand $\rho_{25°C}$ von 167 $\Omega$cm und eine B-Konstante von 3285 K. Zur Anpassung der elektrischen Werte der kobaltfreien NTC-Keramik an die durch die kobalthaltige NTC-Keramik vorgegebenen elektrischen Werte können beispielsweise nach einigen Wiederholungen des Verfahrensschritts D) die Anteile von $NiMn_2O_4$ um 4,95 mol-% und von $CuMn_2O_4$ um 32,8 mol-% erhöht, und 60 mol-% des Gehalts an $ZnMn_2O_4$ durch 0,0984 $zn_{1,5}Mn_{1,5}O_4$ ersetzt werden. Damit ergibt sich im Ergebnis des zuletzt durchgeführten Verfahrensschritts D) eine NTC-Keramik der Zusammensetzung $Ni_{0,6168}Cu_{0,1712}Zn_{0,2614}Mn_{1,9512}O_4$ mit einem spezifischen Widerstand $\rho_{25°C}$ von 97 $\Omega$cm und einer B-Konstante von 3164 K.

Weiterhin kann in dem Verfahren im Verfahrensschritt A) $Ni_{0,5547}Cu_{0,1080}Co_{0,2817}Mn_{2,0553}O_4$ in 0,5547 $NiMn_2O_4$, 0,1080 $CuMn_2O_4$, 0,2817 $CoMn_2O_4$ und 0,0555 $Mn_3O_4$ formal zerlegt werden. Die kobalthaltige NTC-Keramik weist ein $\rho_{25°C}$ von 140 bis 200 $\Omega$cm, beispielsweise von 145 $\Omega$cm und eine B-Konstante von 3300 K auf. Im Verfahrensschritt B) kann dann $CoMn_2O_4$ durch $ZnMn_2O_4$ ersetzt werden, wodurch nach dem formalen Zusammensetzen gemäß Verfahrensschritt C) $Ni_{0,5547}Cu_{0,1080}Zn_{0,2817}Mn_{2,0553}O_4$ erhalten wird. Die elektrischen Eigenschaften dieser Zusammensetzung sind $\rho_{25°C} = 277$ Qcm und B = 3467 K. Die Anpassung der elektrischen Werte an die durch die kobalthaltige NTC-Keramik vorgegebenen elektrischen Werte im Verfahrensschritt D) kann beispielsweise durch Verringerung des Gehalts an $NiMn_2O_4$ und von $ZnMn_2O_4$ um jeweils 0,7 mol-% und Erhöhung des Anteils an $CuMn_2O_4$ um 30,8 mol-% bei gleichzeitiger Verringerung des Anteils von $Mn_3O_4$ um 49,3 mol-% erreicht werden. Diese Anpassung kann innerhalb einiger Wiederholungen des Verfahrensschritts D) erfolgen. Damit ergibt sich eine kobaltfreie NTC-Keramik mit der Zusammensetzung $Ni_{0,5508}Cu_{0,1413}Zn_{0,2797}Mn_{2,0280}O_4$. Diese Keramik weist ein $\rho_{25°C}$ von 144 $\Omega$cm und eine B-Konstante von 3299 K auf. Diese Werte weisen wieder eine gute Übereinstimmung mit den jeweiligen Werten der kobalthaltigen NTC-Keramik auf.

Nach dem Verfahren kann im Verfahrensschritt A) beispielsweise auch $Ni_{0,2817}Cu_{0,1499}Co_{0,5708}Mn_{1,998}O_4$ in 0,2817 $NiMn_2O_4$, 0,1499 $CuMn_2O_4$, 0,5673 $CoMn_2O_4$ und 0,00115 $Co_3O_4$ formal zerlegt werden. Die kobalthaltige NTC-Keramik weist ein $\rho_{25°C}$ von 70 $\Omega$cm und eine B-Konstante von 3060 K auf. Im Verfahrensschritt B) kann beispielsweise die Summe der beiden Kobalt-Spinellverbindungen durch 0,5685 $ZnMn_2O_4$ und davon 31,2 mol-% durch $CuMn_2O_4$ formal ersetzt werden, sodass nach dem Verfahrensschritt C) und in dem Verfahrensschritt D) die Zusammensetzung $Ni_{0,2817}Zn_{0,3911}Cu_{0,3274}Mn_{2,000}O_4$ resultiert. Damit ergibt sich eine B-Konstante von 3062 K und ein $\rho_{25°C}$ von 315 $\Omega$cm. Da in diesem Fall der spezifische Widerstand der kobaltfreien NTC-Keramik von der kobalthaltigen NTC-Keramik abweicht, kann der Widerstandswert auch durch die Bauform, beispielsweise die Fläche und/oder Dicke des Keramikbauteils angepasst werden. Eine weitere Anpassung durch Ändern der Zusammensetzung ist ebenfalls denkbar.

Weiterhin kann in dem Verfahren im Verfahrensschritt A) $Ni_{0,5130}Co_{0,2475}Cu_{0,4602}Mn_{1,7993}O_4$ in 0,42945 $NiMn_2O_4$, 0,4602 $CuMn_2O_4$, 0,08355 $NiCo_2O_4$ und 0,02680 $Co_3O_4$ zerlegt werden. Diese kobalthaltige Keramik hat einen spezifischen Widerstand $\rho_{25°C}$ von 8 bis 12 $\Omega$cm und eine B-Konstante von 2800 K. Weiterhin weist sie einen geringen Mn-Gehalt auf, wodurch bei der formalen Zerlegung in Spinellkomponenten neben $CuMn_2O_4$ und $NiMn_2O_4$ auch $NiCo_2O_4$ und $Co_3O_4$ zu berücksichtigen sind. Im Verfahrensschritt B) können $NiCo_2O_4$ durch $CuMn_2O_4$ und $Co_3O_4$ durch $ZnMn_2O_4$ ersetzt werden. Damit ergibt sich zunächst im Verfahrensschritt C) die kobaltfreie NTC-Keramik $Ni_{0,4295}Zn_{0,0268}Cu_{0,5438}Mn_{2,000}O_4$ mit den elektrischen Eigenschaften $\rho_{25°C} = 4,8$ $\Omega$cm und B = 2672 K. Die Anpassung an die elektrischen Eigenschaften der kobalthaltigen NTC-Keramik im Verfahrensschritt D) kann beispielsweise durch Erhöhung des Gehalts von $ZnMn_2O_4$ auf 0,1522 $ZnMn_2O_4$ und Erniedrigung des Gehalts von $CuMn_2O_4$ um den gleichen Betrag auf 0,4183 $CuMn_2O_4$ erreicht werden. Daraus ergibt sich im Verfahrensschritt C) die kobaltfreie NTC-Keramik $Ni_{0,4295}Zn_{0,1522}Cu_{0,4183}Mn_{2,000}O_4$ mit den Eigenschaften $\rho_{25°C} = 9,3$ $\Omega$cm und B = 2797 K.

Es wird weiterhin die Verwendung einer kobaltfreien NTC-Keramik, die nach dem obigen Verfahren hergestellt ist, als Einschaltstrombegrenzer angegeben. Basierend auf den oben erläuterten elektrischen Eigenschaften, die von denjenigen kobalthaltiger NTC-Keramiken höchstens geringfügig abweichen, eignen sich die kobaltfreien NTC-Keramiken zur Einschaltstrombegrenzung aufgrund ihres geringen spezifischen Widerstands und ihrer geeigneten Aktivierungsenergie.

Im Folgenden wird die Herstellung einer kobaltfreien NTC-Keramik anhand eines Ausführungsbeispiels näher erläutert.

Das Verfahren kann im Verfahrensschritt E) beispielsweise durch das Mixed-Oxide-Verfahren ausgeführt werden. Dabei werden die Ausgangsstoffe, beispielsweise Manganoxid, Nickelcarbonat, Kupferoxid oder Zinkoxid im stöchiometrischen Verhältnis der Metallkationen, das mittels der Verfahrensschritte A) bis D) ermittelt wurde, gemischt. Die Ausgangsstoffe sollten dabei einen möglichst geringen, analytisch kontrollierten Verunreinigungsgehalt an Spurenelementen aufweisen. Die Ausgangsstoffe können beispielsweise nass gemischt werden.

Nach einer Nassmischung der Ausgangsstoffe wird der daraus resultierende Schlicker eingedampft, getrocknet und gesiebt und im Anschluss bei beispielsweise 850°C für vier Stunden kalziniert. Bei einem weiteren Erhitzen kann die Bildung der Spinellphase, die bereits beim Kalzinieren begonnen hat, vollendet werden. Das erhaltene Material wird mit $ZrO_2$-Kugeln beispielsweise in einer Exzentermühle auf einen durchschnittlichen Durchmesser $d_{50}$ von etwa 1 $\mu$m gemahlen. Anschließend wird ein zweites Mal bei ca. 900°C etwa vier Stunden lang kalziniert.

In einem weiteren Schritt kann eine Feinmahlung des Materials auf einen durchschnittlichen Durchmesser $d_{50}$ von weniger als 1 $\mu$m erfolgen. Daraufhin wird das Material granuliert und in zylindrische Proben gepresst, die Abmessungen von beispielsweise 5,5 mm Durchmesser und 1,5 bis 1,55 mm Höhe aufweisen können, und die auf Sinterkorundplatten, beispielsweise ALOX-Unterlagen, bei etwa 1210°C für zwei Stunden gesintert werden. Das Sintern wird mit einer stufenweisen Abkühlung auf 1000°C für zwei Stunden, auf 800°C für eine Stunde, auf 700°C für zwei Stunden und auf 600°C für drei Stunden beendet. Weist die NTC-Keramik einen erhöhten Kupfergehalt und vermindertem Mangangehalt auf, wird zwei Stunden bei 1100°C gesintert und stufenweise auf 900°C für eine Stunde, auf 800°C für eine Stunde, auf 700°C für zwei Stunden und auf 600°C für drei Stunden abgekühlt. Mit diesem Verfahren werden relative Dichten der kobaltfreien NTC-Keramik von über 98% erreicht.

Die Messung der elektrischen Eigenschaften, also des spezifischen Widerstands und der B-Konstante der Proben erfolgt bei 25°C und 100°C nach Aufbringen und Einbrennen bei etwa 750°C einer Silberpaste als elektrischen Kontakt auf die zylinderförmigen Proben. Es werden von jeder kobaltfreien NTC-Keramik 10 bis 15 gesinterte Proben vermessen und Mittelwerte gebildet.

Die derart hergestellten NTC-Keramiken können beispielsweise in Bauteilen zur Einschaltstrombegrenzung eingesetzt werden.

## Patentansprüche

1. Kobaltfreie Keramik mit negativem Temperaturkoeffizienten des elektrischen Widerstands (NTC-Keramik), aufweisend die allgemeine Formel $Ni_{a'}Cu_{b'}Zn_{c'}Mn_{d'}O_4$ mit 0,09 < a' < 0,6, 0,02 < b' < 0,65, 0,12 < c' < 0,58 und 1,6 < d' < 2,1, wobei gilt a' + b' + c' + d' = 3.

2. Verwendung einer kobaltfreien Keramik mit negativem Temperaturkoeffizienten des elektrischen Widerstands (NTC-Keramik), aufweisend die allgemeine Formel $Ni_{a'}Cu_{b'}Zn_{c'}Mn_{d'}O_4$ mit 0,09 < a' < 0,6, 0,02 < b' < 0,65, 0,12 < c' < 0,58 und 1,6 < d' < 2,1, mit a' + b' + c' + d' = 3, als Einschaltstrombegrenzer.

3. Verwendung der kobaltfreien NTC-Keramik nach dem vorhergehenden Anspruch, aufweisend eine Zusammensetzung, die aus einer Gruppe ausgewählt ist, die $Ni_{0,5748}Cu_{0,3164}Zn_{0,1440}Mn_{1,965}O_4$, $Ni_{0,5508}Cu_{0,1413}Zn_{0,2797}Mn_{2,0280}O_4$, $Ni_{0,2817}Cu_{0,3274}Zn_{0,3911}Mn_{2,000}O_4$ und $Ni_{0,4295}Cu_{0,4183}Zn_{0,1522}Mn_{2,000}O_4$ umfasst.

4. Verfahren zur Herstellung einer kobaltfreien NTC-Keramik, deren Zusammensetzung von einer kobalthaltigen NTC-Keramik mit der allgemeinen Formel $Ni_aCu_bCo_cMn_dO_4$ mit 0,09 < a < 0,6, 0,02 < b < 0,65, 0,12 < c < 0,58 und 1,6 < d < 2,1 abgeleitet ist mit a + b + c + d = 3, wobei Co durch Zn ersetzt ist, umfassend die Verfahrensschritte:

   A) Formales Zerlegen von $Ni_aCu_bCo_cMn_dO_4$ in Spinell-Komponenten, die jeweils zumindest ein Oxid von Ni, Cu, Co oder Mn enthalten,
   B) Formales Ersetzen zumindest der kobalthaltigen Spinell-Komponenten durch kobaltfreie Spinell-Komponenten,
   C) Formales Zusammensetzen der zumindest teilweise ersetzten Spinell-Komponenten zu einer Zwischenstufe aufweisend die Zusammensetzung $Ni_{\alpha}Cu_{\beta}Zn_{\gamma}Mn_{\delta}O_4$ mit 0,09 < $\alpha$ < 0,6, 0,02 < $\beta$ < 0,65, 0,12 < $\gamma$ < 0,58 und 1,6 < $\delta$ < 2,1 mit $\alpha+\beta+\gamma+\delta$ = 3,
   D) Anpassung von $\alpha$, $\beta$, $\gamma$ und $\delta$ zur Erhaltung einer Zusammensetzung $Ni_{a'}Cu_{b'}Zn_{c'}Mn_{d'}O_4$ mit 0,09 < a' < 0,6, 0,02 < b' < 0,65, 0,12 < c' < 0,58 und 1,6 < d' < 2,1,
   wobei gilt a' + b' + c' + d' = 3,
   wobei die Anpassung im Verfahrensschritt D) unter Angleichung der elektrischen Eigenschaften der kobaltfreien NTC-Keramik an die elektrischen Eigenschaften der kobalthaltigen NTC-Keramik erfolgt,

E) Herstellen einer Keramik mit der Zusammensetzung $Ni_{a'}Cu_{b'}Zn_{c'}Mn_{d'}O_4$ aus Ausgangsstoffen,

wobei der Verfahrensschritt E) folgende Verfahrensschritte umfasst:

E1) Mischen und Kalzinieren der Ausgangsstoffe im stöchiometrischen Verhältnis der Metallkationen, das mittels der Verfahrensschritte A)-D) erhalten wurde, und
E2) Sintern des im Verfahrensschritt E1) erhaltenen Materials.

5.  Verfahren nach dem vorhergehenden Anspruch, wobei die Spinell-Komponenten im Verfahrensschritt A) aus einer Gruppe ausgewählt sind, die $CuMn_2O_4$, $NiMn_2O_4$, $MnCo_2O_4$, $NiCo_2O_4$, $Co_3O_4$, $CoMn_2O_4$ und $Mn_3O_4$ umfasst.

6.  Verfahren nach dem vorhergehenden Anspruch, wobei im Verfahrensschritt B) die kobaltfreien Spinell-Komponenten ausgewählt sind aus $ZnMn_2O_4$, $Zn_{1,5}Mn_{1,5}O_4$ und $CuMn_2O_4$.

7.  Verfahren nach einem der Ansprüche 4 bis 6, wobei der Verfahrensschritt D) mindestens zweimal wiederholt wird.

8.  Verfahren nach einem der Ansprüche 4 bis 7, wobei im Verfahrensschritt A) $Ni_{0,5553}Cu_{0,2278}Co_{0,2685}Mn_{1,8984}O_4$ in 0,5553 $NiMn_2O_4$, 0,2778 $CuMn_2O_4$, 0,0653 $CoMn_2O_4$ und 0,1016 $MnCo_2O_4$ formal zerlegt wird, im Verfahrensschritt B) $CoMn_2O_4$ durch $ZnMn_2O_4$ und $MnCo_2O_4$ durch 2/3 $Zn_{1,5}Mn_{1,5}O_4$ formal ersetzt wird, und im Verfahrensschritt D) die Zusammensetzung $Ni_{0,5748}Cu_{0,3164}Zn_{0,1440}Mn_{1,965}O_4$ erhalten wird.

9.  Verfahren nach einem der Ansprüche 4 bis 7, wobei im Verfahrensschritt A) $Ni_{0,5547}Cu_{0,1080}Co_{0,2817}Mn_{2,0553}O_4$ in 0,5547 $NiMn_2O_4$, 0,1080 $CuMn_2O_4$, 0,2817 $CoMn_2O_4$ und 0,0555 $Mn_3O_4$ formal zerlegt wird, im Verfahrensschritt B) $CoMn_2O_4$ durch $ZnMn_2O_4$ formal ersetzt wird, und im Verfahrensschritt D) die Zusammensetzung $Ni_{0,5508}Cu_{0,1413}Zn_{0,2797}Mn_{2,0280}O_4$ erhalten wird.

10. Verfahren nach einem der Ansprüche 4 bis 7, wobei im Verfahrensschritt A) $Ni_{0,2817}Cu_{0,1499}Co_{0,5708}Mn_{1,998}O_4$ in 0,2817 $NiMn_2O_4$, 0,1499 $CuMn_2O_4$, 0,5673 $CoMn_2O_4$ und 0,00115 $Co_3O_4$ formal zerlegt wird, im Verfahrensschritt B) $CoMn_2O_4$ und $Co_3O_4$ durch $ZnMn_2O_4$ und $CuMn_2O_4$ formal ersetzt wird, und im Verfahrensschritt D) die Zusammensetzung $Ni_{0,2817}Cu_{0,3274}Zn_{0,3911}Mn_{2,000}O_4$ erhalten wird.

11. Verfahren nach einem der Ansprüche 4 bis 7, wobei im Verfahrensschritt A) $Ni_{0,5130}Cu_{0,4602}Co_{0,2475}Mn_{1,7993}O_4$ in 0,42945 $NiMn_2O_4$, 0,4602 $CuMn_2O_4$, 0,08355 $NiCo_2O_4$ und 0,02680 $Co_3O_4$ formal zerlegt wird, im Verfahrensschritt B) $NiCo_2O_4$ durch $CuMn_2O_4$ und $Co_3O_4$ durch $ZnMn_2O_4$ formal ersetzt wird, und im Verfahrensschritt D) die Zusammensetzung $Ni_{0,4295}Cu_{0,4183}Zn_{0,1522}Mn_{2,000}O_4$ erhalten wird.

**Claims**

1.  Cobalt-free ceramic having a negative temperature coefficient of electrical resistance (NTC ceramic), having the general formula $Ni_{a'}Cu_{b'}Zn_{c'}Mn_{d'}O_4$ with 0.09 < a' < 0.6, 0.02 < b' < 0.65, 0.12 < c' < 0.58 and 1.6 < d' < 2.1, where a' + b' + c' + d' = 3.

2.  Use of a cobalt-free ceramic having a negative temperature coefficient of electrical resistance (NTC ceramic), having the general formula $Ni_{a'}Cu_{b'}Zn_{c'}Mn_{d'}O_4$ with 0.09 < a' < 0.6, 0.02 < b' < 0.65, 0.12 < c' < 0.58 and 1.6 < d' < 2.1, where a' + b' + c' + d' = 3, as switch-on current limiter.

3.  Use of the cobalt-free NTC ceramic according to the preceding claim, having a composition selected from a group comprising $Ni_{0.5748}Cu_{0.3164}Zn_{0.1440}Mn_{1.965}O_4$, $Ni_{0.5508}Cu_{0.1413}Zn_{0.2797}Mn_{2.0280}O_4$, $Ni_{0.2817}Cu_{0.3274}Zn_{0.3911}Mn_{2.000}O_4$ and $Ni_{0.4295}Cu_{0.4183}Zn_{0.1522}Mn_{2.000}O_4$.

4.  Process for producing a cobalt-free NTC ceramic, the composition of which is derived from a cobalt-containing NTC ceramic having the general formula $Ni_aCu_bCo_cMn_dO_4$ with 0.09 < a < 0.6, 0.02 < b < 0.65, 0.12 < c < 0.58 and 1.6 < d < 2.1, with a + b + c + d = 3, where Co has been replaced by Zn, comprising the process steps of:

A) formally dividing $Ni_aCu_bCo_cMn_dO_4$ into spinel components, each of which contain at least one oxide of Ni, Cu, Co or Mn,

B) formally replacing at least one of the cobalt-containing spinel components with cobalt-free spinel components,

C) formally assembling the at least partly replaced spinel components to form an intermediate having the composition $Ni_\alpha Cu_\beta Zn_\gamma Mn_\delta O_4$ with $0.09 < \alpha < 0.6$, $0.02 < \beta < 0.65$, $0.12 < \gamma < 0.58$ and $1.6 < \delta < 2.1$, with $\alpha + \beta + \gamma + \delta = 3$,

D) adjusting $\alpha$, $\beta$, $\gamma$ and $\delta$ to obtain a composition $Ni_{a'}Cu_{b'}Zn_{c'}Mn_{d'}O_4$ with $0.09 < a' < 0.6$, $0.02 < b' < 0.65$, $0.12 < c' < 0.58$ and $1.6 < d' < 2.1$,

where $a' + b' + c' + d' = 3$,

wherein the adjustment in process step D) is effected with adaptation of the electrical properties of the cobalt-free NTC ceramic to the electrical properties of the cobalt-containing NTC ceramic,

E) producing a ceramic having the composition $Ni_{a'}Cu_{b'}Zn_{c'}Mn_{d'}O_4$ from starting materials,

where process step E) comprises the following process steps:

E1) mixing and calcining the starting materials in the stoichiometric ratio of the metal cations that was obtained by means of process steps A) to D), and

E2) sintering the material obtained in process step E1).

5. Process according to the preceding claim, wherein the spinel components in process step A) are selected from a group comprising $CuMn_2O_4$, $NiMn_2O_4$, $MnCo_2O_4$, $NiCo_2O_4$, $Co_3O_4$, $CoMn_2O_4$ and $Mn_3O_4$.

6. Process according to the preceding claim, wherein the cobalt-free spinel components in process step B) are selected from $ZnMn_2O_4$, $Zn_{1.5}Mn_{1.5}O_4$ and $CuMn_2O_4$.

7. Process according to any of Claims 4 to 6, wherein process step D) is repeated at least twice.

8. Process according to any of Claims 4 to 7, wherein in process step A) $Ni_{0.5553}Cu_{0.2278}Co_{0.2685}Mn_{1.8984}O_4$ is formally divided into 0.5553 $NiMn_2O_4$, 0.2778 $CuMn_2O_4$, 0.0653 $CoMn_2O_4$ and 0.1016 $MnCo_2O_4$, in process step B) $CoMn_2O_4$ is formally replaced by $ZnMn_2O_4$ and $MnCo_2O_4$ by 2/3 $Zn_{1.5}Mn_{1.5}O_4$, and in process step D) the composition $Ni_{0.5748}Cu_{0.3164}Zn_{0.1440}Mn_{1.965}O_4$ is obtained.

9. Process according to any of Claims 4 to 7, wherein in process step A) $Ni_{0.5547}Cu_{0.1080}Co_{0.2817}Mn_{2.0553}O_4$ is formally divided into 0.5547 $NiMn_2O_4$, 0.1080 $CuMn_2O_4$, 0.2817 $CoMn_2O_4$ and 0.0555 $Mn_3O_4$, in process step B) $CoMn_2O_4$ is formally replaced by $ZnMn_2O_4$, and in process step D) the composition $Ni_{0.5508}Cu_{0.1413}Zn_{0.2797}Mn_{2.0280}O_4$ is obtained.

10. Process according to any of Claims 4 to 7, wherein in process step A) $Ni_{0.2817}Cu_{0.1499}Co_{0.5708}Mn_{1.998}O_4$ is formally divided into 0.2817 $NiMn_2O_4$, 0.1499 $CuMn_2O_4$, 0.5673 $CoMn_2O_4$ and 0.00115 $Co_3O_4$, in process step B) $CoMn_2O_4$ and $Co_3O_4$ are formally replaced by $ZnMn_2O_4$ and $CuMn_2O_4$, and in process step D) the composition $Ni_{0.2817}Cu_{0.3274}Zn_{0.3911}Mn_{2.000}O_4$ is obtained.

11. Process according to any of Claims 4 to 7, wherein in process step A) $Ni_{0.5130}Cu_{0.4602}Co_{0.2475}Mn_{1.7993}O_4$ is formally divided into 0.42945 $NiMn_2O_4$, 0.4602 $CuMn_2O_4$, 0.08355 $NiCo_2O_4$ and 0.02680 $Co_3O_4$, in process step B) $NiCo_2O_4$ is formally replaced by $CuMn_2O_4$ and $Co_3O_4$ by $ZnMn_2O_4$, and in process step D) the composition $Ni_{0.4295}Cu_{0.4183}Zn_{0.1522}Mn_{2.000}O_4$ is obtained.

## Revendications

1. Céramique sans cobalt présentant des coefficients de température négatifs de la résistance électrique (céramique NTC), présentant la formule générale $Ni_{a'}Cu_{b'}Zn_{c'}Mn_{d'}O_4$ avec $0,09 < a' < 0,6$, $0,02 < b' < 0,65$, $0,12 < c' < 0,58$ et $1,6 < d' < 2,1$,

avec $a' + b' + c' + d' = 3$.

2. Utilisation d'une céramique sans cobalt présentant des coefficients de température négatifs de la résistance électrique (céramique NTC), présentant la formule générale $Ni_{a'}Cu_{b'}Zr_{c'}Mn_{d'}O_4$ avec $0,09 < a' < 0,6$, $0,02 < b' < 0,65$, $0,12 < c' < 0,58$ et $1,6 < d' < 2,1$,

avec a' + b' + c' + d' = 3,
en tant que limiteur du courant de démarrage.

3. Utilisation de la céramique NTC sans cobalt selon la revendication précédente, présentant une composition qui est choisie dans un groupe qui comprend $Ni_{0,5748}Cu_{0,3164}Zn_{0,1440}Mn_{1,965}O_4$, $Ni_{0,5508}Cu_{0,1413}Zn_{0,2797}Mn_{2,0280}O_4$, $Ni_{0,2817}Cu_{0,3274}Zn_{0,3911}Mn_{2,000}O_4$ et $Ni_{0,4295}Cu_{0,4183}Zn_{0,1522}Mn_{2,000}O_4$.

4. Procédé de fabrication d'une céramique NTC sans cobalt, dont la composition est dérivée d'une céramique NTC contenant du cobalt de formule générale $Ni_aCu_bCo_cMn_dO_4$ avec $0,09 < a < 0,6$, $0,02 < b < 0,65$, $0,12 < c < 0,58$ et $1,6 < d < 2,1$, avec $a + b + c + d = 3$, Co étant remplacé par Zn, comprenant les étapes de procédé suivantes :

   A) la décomposition formelle de $Ni_aCu_bCo_cMn_dO_4$ en composants spinelles, qui contiennent chacun au moins un oxyde de Ni, Cu, Co ou Mn,
   B) le remplacement formel au moins des composants spinelles contenant du cobalt par des composants spinelles sans cobalt,
   C) la composition formelle des composants spinelles au moins partiellement remplacés pour former un intermédiaire présentant la composition $Ni_\alpha Cu_\beta Zn_\gamma Mn_\delta O_4$ avec $0,09 < \alpha < 0,6$, $0,02 < \beta < 0,65$, $0,12 < \gamma < 0,58$ et $1,6 < \delta < 2,1$, avec $\alpha + \beta + \gamma + \delta = 3$,
   D) l'ajustement d'$\alpha$, $\beta$, $\gamma$ et $\delta$ pour obtenir une composition $Ni_{a'}Cu_{b'}Zn_{c'}Mn_{d'}O_4$ avec $0,09 < a' < 0,6$, $0,02 < b' < 0,65$, $0,12 < c' < 0,58$ et $1,6 < d' < 2,1$,
   avec a' + b' + c' + d' = 3,
   l'ajustement à l'étape de procédé D) ayant lieu avec alignement des propriétés électriques de la céramique NTC sans cobalt aux propriétés électriques de la céramique NTC contenant du cobalt,
   E) la fabrication d'une céramique ayant la composition $Ni_{a'}Cu_{b'}Zn_{c'}Mn_{d'}O_4$ à partir des matières premières,

   l'étape de procédé E) comprenant les étapes de procédé suivantes :

   E1) le mélange et la calcination des matières premières en le rapport stoechiométrique des cations métalliques qui a été obtenu au moyen des étapes de procédé A) à D), et
   E2) le frittage du matériau obtenu à l'étape de procédé E1).

5. Procédé selon la revendication précédente, dans lequel les composants spinelles à l'étape de procédé A) sont choisis dans un groupe comprenant $CuMn_2O_4$, $NiMn_2O_4$, $MnCo_2O_4$, $NiCo_2O_4$, $Co_3O_4$, $CoMn_2O_4$ et $Mn_3O_4$.

6. Procédé selon la revendication précédente, dans lequel les composants spinelles sans cobalt à l'étape de procédé B) sont choisis parmi $ZnMn_2O_4$, $Zn_{1,5}Mn_{1,5}O_4$ et $CuMn_2O_4$.

7. Procédé selon l'une quelconque des revendications 4 à 6, dans lequel l'étape de procédé D) est répétée au moins deux fois.

8. Procédé selon l'une quelconque des revendications 4 à 7, dans lequel, à l'étape de procédé A), $Ni_{0,5553}Cu_{0,2278}Co_{0,2685}Mn_{1,8984}O_4$ est décomposé formellement en 0,5553 $NiMn_2O_4$, 0,2778 $CuMn_2O_4$, 0,0653 $CoMn_2O_4$ et 0,1016 $MnCo_2O_4$, à l'étape de procédé B), $CoMn_2O_4$ est remplacé formellement par $ZnMn_2O_4$ et $MnCo_2O_4$ par 2/3 $Zn_{1,5}Mn_{1,5}O_4$, et, à l'étape de procédé D), la composition $Ni_{0,5748}Cu_{0,3164}Zn_{0,1440}Mn_{1,965}O_4$ est obtenue.

9. Procédé selon l'une quelconque des revendications 4 à 7, dans lequel, à l'étape de procédé A), $Ni_{0,5547}Cu_{0,1080}Co_{0,2817}Mn_{2,0553}O_4$ est décomposé formellement en 0,5547 $NiMn_2O_4$, 0,1080 $CuMn_2O_4$, 0,2817 $CoMn_2O_4$ et 0,0555 $Mn_3O_4$, à l' étape de procédé B), $CoMn_2O_4$ est remplacé formellement par $ZnMn_2O_4$ et, à l'étape de procédé D), la composition $Ni_{0,5508}Cu_{0,1413}Zn_{0,2797}Mn_{2,0280}O_4$ est obtenue.

10. Procédé selon l'une quelconque des revendications 4 à 7, dans lequel, à l'étape de procédé A), $Ni_{0,2817}Cu_{0,1499}Co_{0,5708}Mn_{1,998}O_4$ est décomposé formellement en 0,2817 $NiMn_2O_4$, 0,1499 $CuMn_2O_4$, 0,5673 $CoMn_2O_4$ et 0,00115 $Co_3O_4$, à l'étape de procédé B), $CoMn_2O_4$ et $Co_3O_4$ sont remplacés formellement par $ZnMn_2O_4$ et $CuMn_2O_4$ et, à l'étape de procédé D), la composition $Ni_{0,2817}Cu_{0,3274}Zn_{0,3911}Mn_{2,000}O_4$ est obtenue.

11. Procédé selon l'une quelconque des revendications 4 à 7, dans lequel, à l'étape de procédé A), $Ni_{0,5130}Cu_{0,4602}Co_{0,2475}Mn_{1,7993}O_4$ est décomposé formellement en 0,42945 $NiMn_2O_4$, 0,4602 $CuMn_2O_4$, 0,08355

$NiCo_2O_4$ et 0,02680 $Co_3O_4$, à l'étape de procédé B), $NiCo_2O_4$ est remplacé formellement par $CuMn_2O_4$ et $Co_3O_4$ par $ZnMn_2O_4$, et, à l'étape de procédé D), la composition $Ni_{0,429S}Cu_{0,4183}Zn_{0,1522}Mn_{2,000}O_4$ est obtenue.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 6231771 A

**In der Beschreibung aufgeführte Nicht-Patentliteratur**

- **PART K. et al.** The effect of ZnO content and sintering temperature on the electrical properties of Cu-containing $Mn_{1.95-x}Ni_{0.45}Co_{0.15}Cu_{0.45}Zn_xO_4$ ($0 \leq x \leq 0.3$) NTC thermistors. *Journal of Alloys and Compounds,* 2009, vol. 475, 513-517